# EUROPEAN PATENT APPLICATION

(11) **EP 1 577 236 A1**
(43) Date of publication of application: **21.09.2005**
(21) Application number: 03789609.9
(22) Date of filing: 18.12.2003
(51) Int. Cl.: B65G 57/03, B65G 63/00, G06F 17/60

(54) **AIR MIXED CARGO CONTROL SYSTEM AND CONTROL METHOD**

(30) Priority: 26.12.2002 JP 2002378146
(71) Applicant: HONDA MOTOR CO., Ltd., Tokyo 107-8556 (JP)
(72) Inventor: IMANISHI, Kouji, c/o HONDA MOTOR CO., LTD., Tokyo 107-8556 (JP)
(74) Representative: Donné, Eddy
(86) International application number: PCT/JP2003/016230
(87) International publication number: WO 2004/058608

(57) **Abstract**

The invention makes it possible to easily and accurately perform the work of loading consolidated cargo without requiring skill and experience, and makes it possible to reduce the transport cost for each small cargo load.

The invention comprises: a terminal (10) on the side of a cargo owner A, a terminal (20) on the side of a cargo owner B and a terminal (30) on the side of a cargo owner C that have the function of sending cargo data related to a plurality of small cargo loads; a server (40) on the side of a business that handles air cargo and that is connected to these terminals, and that has a function of extracting small cargo loads based on the cargo data that will match the specified load amount of the a pallet (70); and a database (46) that stores basic data that gives the types of pallets (70), the specified load amounts that specify the load weight and dimensions for each air carrier, and the unit fee.

## Description

### DETAILED DESCRIPTION OF THE INVENTION

### Field of the Invention

This invention relates to a consolidated-air-cargo-management system that is applied to the transport of consolidated cargo using aircraft.

### Description of the Related Art:

As cargo transported by aircraft there is direct cargo and consolidated cargo. Direct cargo is cargo for which the cargo owner directly entrusts the transport of the cargo with an air transport company or business that exclusively handles air cargo. Consolidated cargo is a plurality of small cargo loads that have been sorted according to each transport destination or flight of the same aircraft or that have been arranged into one cargo load. This consolidated cargo is widely used as a way of transporting small cargo loads at low cost. As a method of making the consolidated load, Japanese Patent Publication No. 2002-193450 proposes setting up a transfer area between the airport cargo terminal and cargo owner, or in other words, to set up a transfer base where the branch offices of a forwarder or each forwarder collect and deliver to jointly, and the consolidated cargo is made at that transfer area.

In Japanese Patent Publication No. 2002-193450 mentioned above, there is no system created for efficiently making the small cargo loads for making the consolidated load at the transfer area. In other words, the unit fee for air cargo is set according to classification of pallet or container, and is a set amount up until the consolidated cargo loaded on the pallet or in the container reaches a fixed weight. Here, the type of pallet or container used for aircraft transportation is called a unit-load device according to IATA (a unit load device for aircraft), or ULD (unit load devices), and various ULD have been developed since the adoption of using large jets. Moreover, of the ULD for air cargo, there are pallets, nets, containers, igloos, or the like that can be fastened directly to the cargo mounting apparatus of the aircraft, and some are used for through transport.

Therefore, even though the weight of consolidated cargo loaded onto a pallet or container is a fixed amount, the larger the number of small cargo loads is the cheaper the transport cost is for each small cargo load. In this case, the cargo is sorted according to route selection and flight type, and loaded onto pallets or into containers based on a load plan that takes into consideration the weight or balance of the entire consolidated cargo, however, skill and experience are required for that loading work.

The present invention takes into consideration this kind of situation and provides a consolidated-air-cargo-management system that makes it possible to easily and accurately perform the work of loading consolidated cargo without requiring skill and experience, and makes it possible to reduce the transport cost for each small cargo load.

### DISCLOSURE OF INVENTION

The consolidated-air-cargo-management system of this invention comprises: terminals for each cargo owner that have a function for sending cargo data for a plurality of small cargo loads; and a server on the side of a business that handles air cargo and that is connected to the terminals for each cargo owner over a network, and extracts small cargo loads that match the specified load amount of a pallet based on the respective cargo data from the terminals of each cargo owner.

Also, it comprises a database that stores basic data that indicates the type of pallet, the specified load amount that is specified by the load weight and dimensions for each air carrier, and the unit fee; and the server can comprise: an owner-cargo-data-storage unit that stores respective cargo data from the terminals of each cargo owner; a detail-data-extraction unit that extracts detail data from the cargo data stored in the owner-cargo-data-storage unit that gives at least the cargo owner's name, transport destination, product contents, weight of outside packages, size of outside packages and outside package ID Nos.; and a loadable-cargo-extraction unit that extracts a plurality of small cargo loads from the detail data extracted by the detail-data-extraction unit and the basic data stored in the database such that the external dimensions and weight of the entire consolidated cargo matches the specified load amount of the pallet.

Moreover, the server can comprise: a simulation-execution unit that executes simulation of a consolidated load of small cargo loads loaded on the pallet based on the weight of the outside packages and the size of the outside packages of the extracted small cargo loads, and determines whether the arrangement of the small cargo loads is the most efficient; and a cargo-load-information-output unit that outputs cargo load information based on the simulation results from the simulation-execution unit, that shows which small cargo loads are loaded in which location of which layer on the pallet using the outside-package ID numbers.

The consolidated-air-cargo-management method of this invention comprises: a process of sending cargo data from terminals of each cargo owner for a plurality of small cargo loads; and a process of extracting small cargo loads, which match the specified load amount of a pallet based on the respective cargo data from the terminals of each cargo owner, from a server that is connected to the terminals of each cargo owner over a network.

Also, it possible to comprise: a process of storing basic data that indicates the type of pallet, the specified load amount that is specified by the load weight and dimensions for each air carrier, and the unit fee; a process of storing respective cargo data from the terminals of each cargo owner; a process of extracting detail data from the stored cargo data that gives at least the cargo owner's name, transport destination, product contents, weight of outside packages, size of outside packages and outside package ID Nos.; and a process of extracting a plurality of small cargo loads from the extracted detail data and the basic data such that the external dimensions and weight of the entire consolidated cargo matches the specified load amount of the pallet.

Moreover, it is possible to comprise: a process of executing simulation of a consolidated load of small cargo loads loaded on the pallet based on the weight of the outside packages and the size of the outside packages of the extracted small cargo loads, and determining whether the arrangement of the small cargo loads is the most efficient; and a process of outputting cargo load information based on the simulation results that shows which small cargo loads are loaded in which location of which layer on the pallet using the outside-package ID numbers.

### BRIEF DESCRIPTION OF THE DRAWINGS

Fig. 1 is a drawing for explaining the concept of the consolidated-air-cargo-management system of this invention.
Fig. 2 is a block diagram for explaining the details of the consolidated-air-cargo-management system shown in Fig. 1.
Fig. 3 is a drawing showing the cargo data used in the consolidated-air-cargo-management system shown in Fig. 1.
Fig. 4 is a flowchart for explaining the consolidated-air-cargo-management method by the consolidated-air-cargo-management system shown in Fig. 1.
Fig. 5 is a side view for explaining the consolidated-air-cargo-management method by the consolidated-air-cargo-management system shown in Fig. 1.
Fig. 6 is a plan view for explaining the consolidated-air-cargo-management method by the consolidated-air-cargo-management system shown in Fig. 1.

### DESCRIPTION OF THE PREFERRED EMBODIMENT

The preferred embodiment of the invention will be explained below.

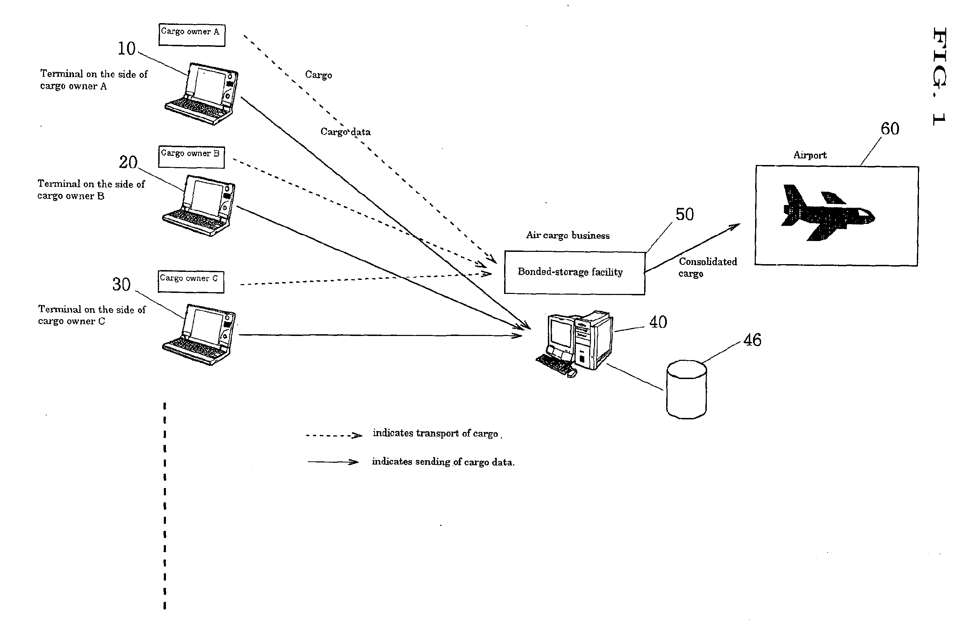

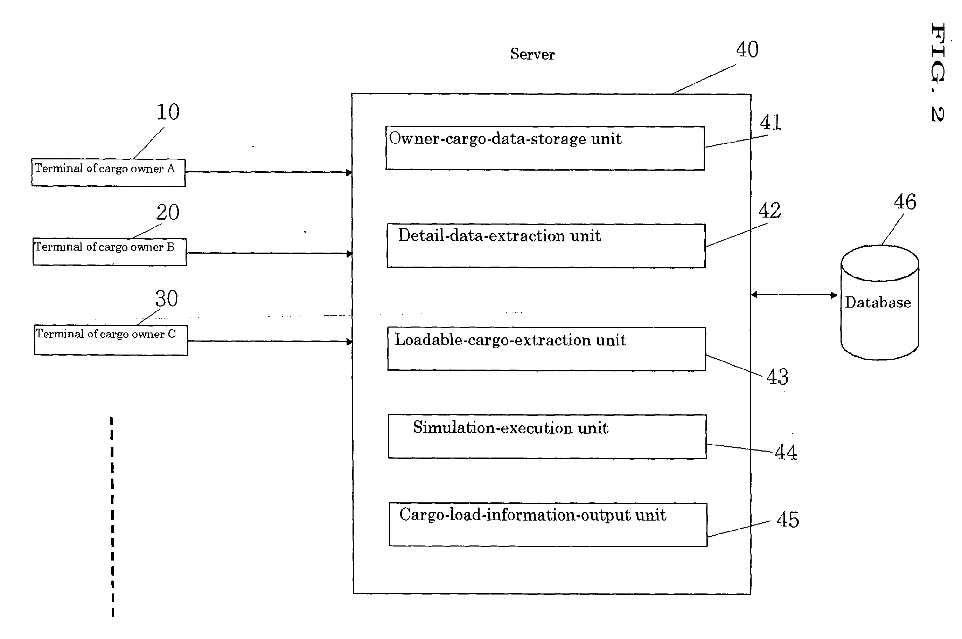

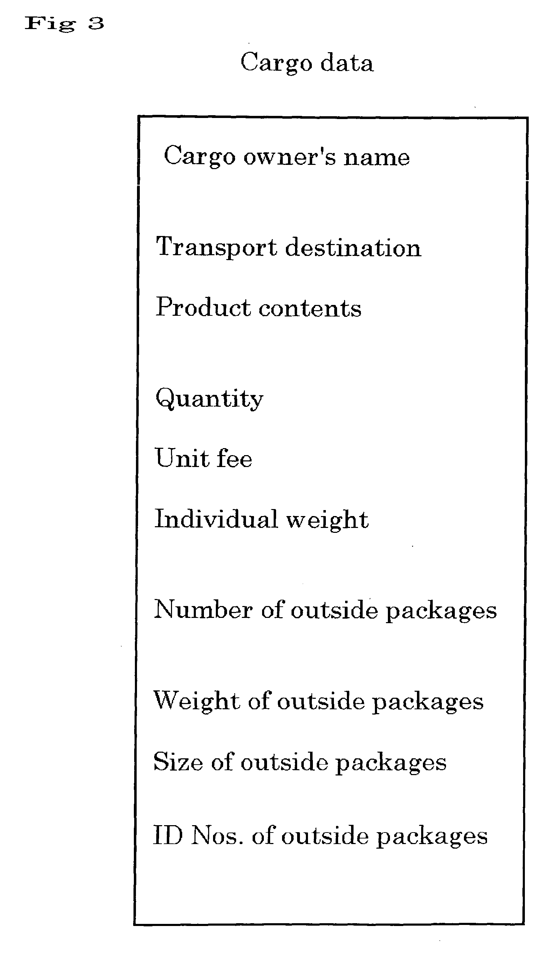

Fig. 1 is a drawing for explaining the concept of the consolidated-air-cargo-management system of this invention, Fig. 2 is a block diagram for explaining the details of the consolidated-air-cargo-management system shown in Fig. 1, Fig. 3 is a drawing showing the cargo data used in the consolidated-air-cargo-management system shown in Fig. 1, and Fig. 4 to Fig. 6 are drawings for explaining the consolidated-air-cargo-management method by the consolidated-air-cargo-management system shown in Fig. 1.

The consolidated-air-cargo-management system shown in Fig. 1 comprises a terminal 10 on the side of a cargo owner A, a terminal 20 of a cargo owner B, a terminal 30 of a cargo owner C, server 40 and database 46. The terminals located on the side of the cargo owners are not limited to three as shown in the figure. The terminal 10 on the side of cargo owner A, terminal 20 on the side of cargo owner B and terminal 30 on the side of cargo owner C and the server 40 are constructed such that they can communicate with each other over a network such as the Internet, exclusive line, etc.

The terminal 10 on the side of cargo owner A, terminal 20 on the side of cargo owner B and terminal 30 on the side of cargo owner C are each owned by the respective cargo owner, and have the function of sending cargo data (described later) for a plurality of small cargo loads to the server 40 over the network. It is possible to use an electronic device such as a desktop personal computer, notebook personal computer, PDA or the like as the terminal 10 on the side of cargo owner A, terminal 20 on the side of cargo owner B and terminal 30 on the side of cargo owner C.

The server 40 has a function for receiving the respective cargo data from the terminal 10 on the side of cargo owner A, terminal 20 on the side of cargo owner B and terminal 30 on the side of cargo owner C, and extracting a plurality of small cargo loads based on that cargo data that match the specified load amount of the pallet 70 described later, and these will be described in detail later. The server 40, for example, can belong to a business that handles air cargo such as a storage business, consolidation business, customs business or the like; and is set up at a bonded-storage facility 50 for example. Basic data that indicates the type of pallet, the specified load amount that is specified by the load weight and dimensions for each air carrier, and the unit fee, is stored in the database 46.

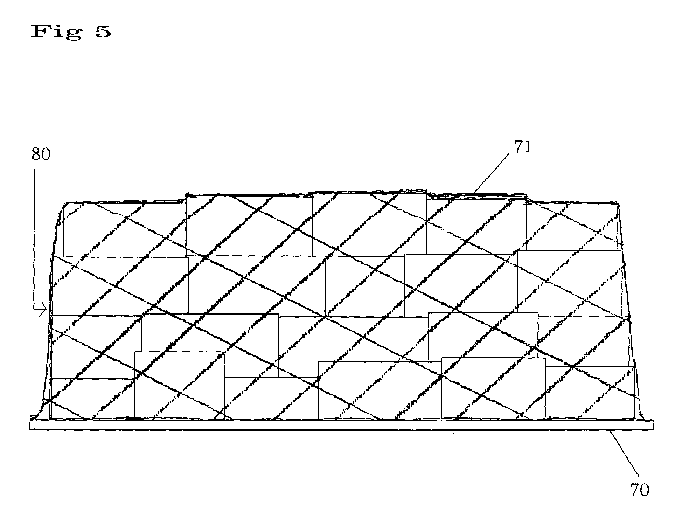

Here, to briefly explain the flow of the small cargo loads from each cargo owner A to C, first, the small cargo loads from each cargo owner A to C are delivered to the bonded-storage facility 50 by a delivery company. The small cargo loads from each cargo owner A to C that are delivered to the bonded-storage facility 50 are sorted or arranged at the bonded-storage facility 50 for each transport destination or flight, and as shown in Fig. 5, they are loaded onto a pallet 70, for example, as consolidated cargo 80. In order to prevent the load from collapsing, the consolidated cargo 80 is covered by a net 71. When doing this, the server 40 takes into consideration the entire weight or balance of the consolidated cargo 80, and obtains cargo-loading information showing an efficient way of arranging the small cargo load on one pallet 70, and the consolidated cargo 80 is made up based on that cargo-loading information. Next, the business that handles air cargo performs the work for clearing customs, and after export permission is obtained, the consolidated cargo 80 is moved to a certain location at the airport 60 that is specified by the air carrier.

Next, details of the server 40 will be explained.

As shown in Fig. 2, the server 40 comprises an owner-cargo-data-storage unit 41, a detail-data-extraction unit 42, a loadable-cargo-extraction unit 43, a simulation-execution unit 44 and a cargo-load-information-output unit 45.

Cargo data from the terminal 10 of cargo owner A, terminal 20 of cargo owner B and terminal 30 of cargo owner C are stored in the owner-cargo-data-storage unit 41 for each cargo owner. As shown in Fig. 3, the cargo data can contain, for example, detail data such as the cargo owner's name, transport destination, product contents, quantity, unit cost, individual weight, number of outside packages, weight of outside packages, size of outside packages, outside package ID Nos., etc.

After a cargo-load-extraction instruction is output, the detail-data-extraction unit 42 extracts the detail data in the cargo data that is stored in the owner-cargo-data-storage unit 41. The extracted detail data is at least the cargo owner's name, transport destination, product contents, weight of outside packages, size of outside packages and outside package ID Nos.

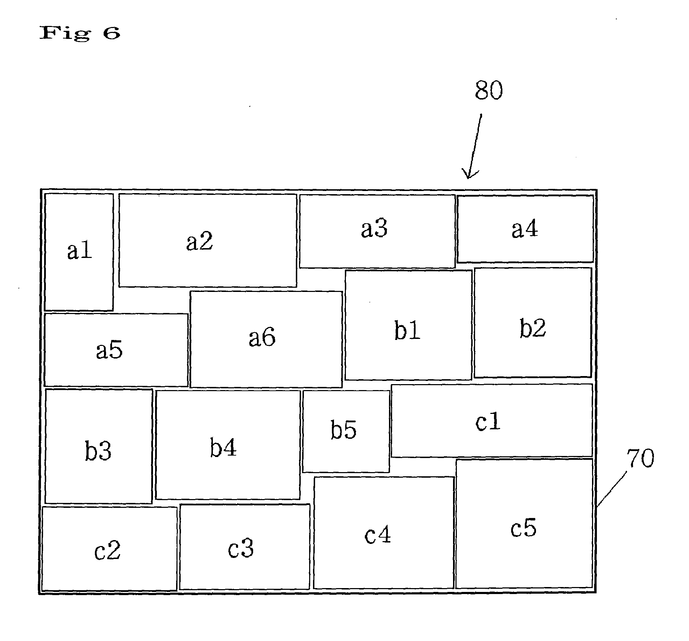

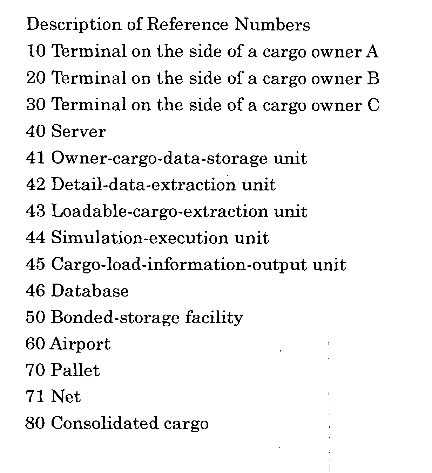

The loadable-cargo-extraction unit 43 extracts a plurality of small cargo loads from the detail data extracted by the detail-data-extraction unit 42 and the type of pallet 70 and basic data for each air carrier that are stored in the database 46 such that the outer dimensions and weight of the overall consolidated cargo 80 match the specified load amount of the pallet 70. The extracted small cargo loads are identified by the outside package ID Nos. such as a1 to a6, b1 to b5 and c1 to c5 as shown in Fig. 6 looking down from above the pallet 70, for example. Here, a1 to a6 indicate the attributes of cargo owner A, b1 to b5 indicate the attributes of cargo owner B and c1 to c5 indicate the attributes of cargo owner C.

The simulation-execution unit 44 executes a simulation of the consolidated cargo 80 of small cargo loads loaded on the pallet 70, as shown in Fig. 5, based on the outside package weights and outside package sizes of the small cargo loads that were extracted by the loadable-cargo-extraction unit 43. From this simulation, the weight and balance of the entire consolidated cargo 80 are taken into consideration to further determine whether or not it is the most efficient method of arranging the small cargo loads on one pallet 70. Here, the balance takes into consideration, for example, whether or not the height of the top level of the pallet 70 is uniform, whether or not there are small cargo loads protruding from the sides, and whether or not small cargo loads with weak packaging are loaded on the bottom level.

The cargo-load-information-output unit 45 outputs the cargo load information of the small cargo loads that are loaded on one pallet 70, for example, based on the simulation results of the simulation-execution unit 44.

Next, the consolidated-air-cargo-management method will be explained.

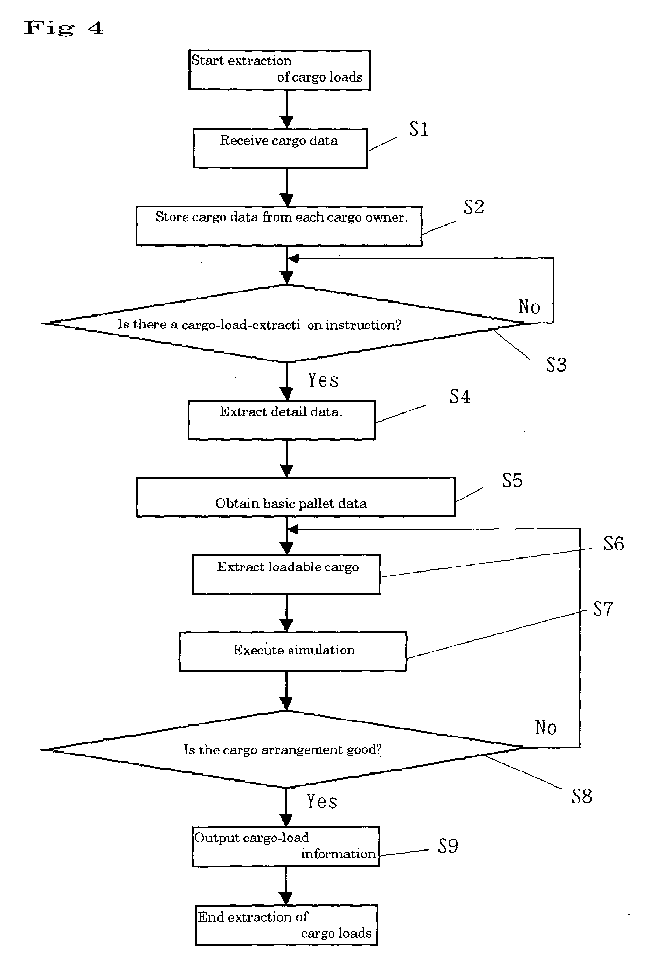

First, as shown in Fig. 4, after the cargo data from terminal 10 of cargo owner A, terminal 20 of cargo owner B and terminal 30 of cargo owner C has been received by the server (step S1), the respective cargo data is stored for each cargo owner in the owner-cargo-data-storage unit 41 (step S2). As mentioned above, the cargo data comprises detail data giving the cargo owner's name, transport destination, product contents, quantity, unit cost, individual weight, number of outside packages, weight of outside packages, size of outside packages, outside package ID Nos., etc.

Here, after a cargo-load-extraction instruction is output (step S3), the detail-data-extraction unit 42 extracts detail data from the cargo data stored in the owner-cargo-data-storage unit 41 (step S4). As mentioned above, the extracted detail data contains at least the cargo owner's name, transport destination, product contents, weight of outside packages, size of outside packages and outside package ID Nos.

Next, the loadable-cargo-extraction unit 43 obtains basic data stored in the database 46 for the type of pallets 70 (step S5), and from that obtained basic data and the detail data extracted by the detail-data-extraction unit 42, it performs extraction of small cargo loads such that the outer dimension and weight of the entire consolidated cargo 80 matches the specified load amount for the pallet 70 (step S6). Here, the extracted small cargo loads are identified by the outer package ID numbers a1, b1, c1 ... as shown in Fig. 6.

Next, the simulation-execution unit 44 executes simulation of the consolidated cargo 80 of small cargo loads loaded on the pallet 70 based on the outside-package weights and outside-package sizes of the small cargo loads extracted by the loadable-cargo-extraction unit 43 as shown in Fig. 5 for example (step S7). From this simulation, the weight and balance of the entire consolidated cargo 80 are taken into consideration to further determine whether or not it is the most efficient method of arranging the small cargo loads on one pallet 70 (step S8). The balance takes into consideration, for example, whether or not the height of the top level of the pallet 70 is uniform, whether or not there are small cargo loads protruding from the sides, and whether or not small cargo loads with weak packaging are loaded on the bottom level.

Here, when the method of arranging the small cargo loads is not good, the process returns to step S6 again and the loadable-cargo-extraction unit 43 performs extraction of different small cargo loads such that the outer dimension and weight of the entire consolidated cargo 80 matches the specified load amount for the pallet 70.

On the other hand, when the method of arranging the small cargo loads is good, the cargo-load-information-output unit 45 outputs the cargo load information of the small cargo loads that are loaded on one pallet 70 based on the simulation results from the simulation-execution unit 44. That is, cargo load information showing the small cargo loads of the consolidated cargo and their arrangement on the first layer on the pallet 70 as shown in Fig. 6 looking down from above the pallet 70, for example, is output. In this way, it is possible to identify the position on the pallet 70 of outside-package ID numbers a1 to a6 having the attributes of owner A, outside-package ID numbers b1 to b5 having the attributes of owner B, and outside-package ID numbers c1 to c5 having the attributes of owner C. Therefore, small cargo loads that match the outside-package ID Nos. can be loaded on the pallet 70 such that they match the positions of the outside-package ID Nos. The consolidated cargo is loaded on the pallet 70 in this way and covered by a net as shown in Fig. 5 to secure the load so that it does not collapse.

In this way, this embodiment comprises: a terminal 10 on the side of a cargo owner A, a terminal 20 on the side of a cargo owner B and a terminal 30 on the side of a cargo owner C that have the function of sending cargo data related to a plurality of small cargo loads; a server 40 on the side of a business that handles air cargo and that is connected to these terminals, and that has a function of extracting small cargo loads based on the cargo data that will match the specified load amount of the a pallet 70; and a database 46 that stores basic data that gives the types of pallets 70, the specified load amounts that specify the load weight and dimensions for each air carrier, and the unit fee.

Moreover, the server 40 stores cargo data from the terminal 10 of cargo owner A, terminal 20 of cargo owner B and terminal 30 of cargo owner C in an owner-cargo-data-storage unit 41, and when there is a cargo-load-extraction instruction, the detail-data-extraction unit 42 extracts detail data from the cargo data stored in the owner-cargo-data-storage unit 41 that gives at least the cargo owner's name, transport destination, product contents, weight of outside packages, size of outside packages and outside package ID Nos., the loadable-cargo-extraction unit 43 extracts a plurality of small cargo loads from the detail data extracted by the detail-data-extraction unit 42 and the basic data stored in the database 46 such that the external dimensions and weight of the entire consolidated cargo matches the specified load amount of the pallet, and the simulation-execution unit 44 executes simulation of a consolidated load of small cargo loads loaded on the pallet 70 and determines whether the arrangement of the small cargo loads is the most efficient, so it is possible to increase the number of small cargo loads that are loaded on the pallet 70 and reduce the transport cost for each small cargo load.

Also, based on the simulation results by the simulation-execution unit 44, cargo load information is output that shows which small cargo loads are loaded in which location of which layer on the pallet using the outside-package ID Nos. a1 to a6 having the attributes of cargo owner A, the outside-package ID Nos. b1 to b5 having the attributes of cargo owner B and the outside-package ID Nos. c1 to c5 having the attributes of cargo owner C, so it is possible to perform the work of loading the consolidated cargo easily and accurately without the need for skill and experience.

### INDUSTRIAL APPLICABILITY

In the consolidated-air-cargo-management system of this invention, after cargo data related to a plurality of small cargo loads are sent from the terminals of each of the cargo owners, the server connected to the terminals of each of the cargo owners by way of a network extracts small cargo loads that meet the loading specifications for the pallet based on the respective cargo data from the terminals of each of the cargo owners, so it is possible to perform the work of loading consolidated cargo easily and accurately without the need for skill and experience, and it is also possible to reduce the transport cost for each small cargo load.

## Claims

1. A consolidated-air-cargo-management system comprising:
terminals for each cargo owner that have a function for sending cargo data for a plurality of small cargo loads; and
a server on the side of a business that handles air cargo and that is connected to the terminals for each said cargo owner over a network, and extracts small cargo loads that match the specified load amount of a pallet based on said respective cargo data from the terminals of each said cargo owner.

2. The consolidated-air-cargo-management system of claim 1 further comprising:
a database that stores basic data that indicates the type of said pallet, the specified load amount that is specified by the load weight and dimensions for each air carrier, and the unit fee, is stored in the database, and wherein
said server comprises:
an owner-cargo-data-storage unit that stores respective cargo data from the terminals of each said cargo owner;
a detail-data-extraction unit that extracts detail data from the cargo data stored in the said owner-cargo-data-storage unit that gives at least the cargo owner's name, transport destination, product contents, weight of outside packages, size of outside packages and outside package ID Nos.; and
a loadable-cargo-extraction unit that extracts a plurality of small cargo loads from the detail data extracted by said detail-data-extraction unit and the basic data stored in said database such that the external dimensions and weight of the entire consolidated cargo matches the specified load amount of said pallet.

3. The consolidated-air-cargo-management system of claim 1 or claim 2 wherein
said server comprises:
a simulation-execution unit that executes simulation of a consolidated load of small cargo loads loaded on said pallet based on the weight of the outside packages and the size of the outside packages of said extracted small cargo loads, and determines whether the arrangement of the small cargo loads is the most efficient; and
a cargo-load-information-output unit that outputs cargo load information based on the simulation results from the simulation-execution unit, that shows which small cargo loads are loaded in which location of which layer on said pallet using the outside-package ID numbers.

4. A consolidated-air-cargo-management method comprising:
a process of sending cargo data from terminals of each cargo owner for a plurality of small cargo loads; and
a process of extracting small cargo loads, which match the specified load amount of a pallet based on the respective cargo data from the terminals of each said cargo owner, from a server that is connected to the terminals of each said cargo owner over a network.

5. The consolidated-air-cargo-management method of claim 4 further comprising:
a process of storing basic data that indicates the type of said pallet, the specified load amount that is specified by the load weight and dimensions for each air carrier, and the unit fee;
a process of storing respective cargo data from the terminals of each said cargo owner;
a process of extracting detail data from said stored cargo data that gives at least the cargo owner's name, transport destination, product contents, weight of outside packages, size of outside packages and outside package ID Nos.; and
a process of extracting a plurality of small cargo loads from said extracted detail data and said basic data such that the external dimensions and weight of the entire consolidated cargo matches the specified load amount of said pallet.

6. The consolidated-air-cargo-management method of claim 4 or claim 5 further comprising:
a process of executing simulation of a consolidated load of small cargo loads loaded on said pallet based on the weight of the outside packages and the size of the outside packages of said extracted small cargo loads, and determining whether the arrangement of the small cargo loads is the most efficient; and
a process of outputting cargo load information based on said simulation results that shows which small cargo loads are loaded in which location of which layer on said pallet using said outside-package ID numbers.
